# EUROPÄISCHE PATENTSCHRIFT

(11) **EP 2 748 498 B1**
(45) Veröffentlichungstag und Bekanntmachung des Hinweises auf die Patenterteilung: **05.10.2016**
(21) Anmeldenummer: 11748665.4
(22) Anmeldetag: 25.08.2011
(51) Int. Cl.: F16K 11/076, F16K 11/08

(54) **DAMPFREINIGUNGSGERÄT**
STEAM CLEANING DEVICE
APPAREIL DE NETTOYAGE À VAPEUR

(43) Veröffentlichungstag der Anmeldung: 02.07.2014
(73) Patentinhaber: Alfred Kärcher GmbH & Co. KG, 71364 Winnenden (DE)
(72) Erfinder: SCHÖNEWALD, Michael, 71111 Waldenbuch (DE); ENGELE, Jochen, 73635 Rudersberg (DE)
(74) Vertreter: Hoeger, Stellrecht & Partner Patentanwälte mbB
(86) Internationale Anmeldenummer: PCT/EP2011/064649
(87) Internationale Veröffentlichungsnummer: WO 2013/026488

(56) Entgegenhaltungen:
- WO-A1-2006/118361
- DE-A1- 10 258 832
- DE-B3- 10 324 874

## Beschreibung

Die Erfindung betrifft ein Dampfreinigungsgerät mit einer Steuereinrichtung zur Steuerung der Abgabe von Dampf mit den Merkmalen des Oberbegriffes von Patentanspruch 1.

Steuereinrichtungen mit einem Ventil, das einen ersten Einlass und einen Auslass aufweist sowie eine drehbar gelagerte Ventilspindel, wobei in Abhängigkeit von der Drehstellung der Ventilspindel die Durchflussmenge von Dampf vom ersten Einlass zum Auslass einstellbar ist, sind aus der Veröffentlichung DE 102 58 832 A1 bekannt. Sie kommen bei Dampfreinigungsgeräten zum Einsatz, mit deren Hilfe heißer Dampf auf eine zu reinigende Fläche gerichtet werden kann. Mit Hilfe eines Ventils kann die Abgabemenge von Dampf gesteuert werden. Das Ventil umfasst ein Ventilgehäuse mit einem ersten Einlass und einem Auslass. Der Dampf kann über den ersten Einlass in das Ventilgehäuse hinein und über den Auslass aus dem Ventilgehäuse heraus strömen. Die Dampfdurchflussmenge lässt sich mit Hilfe einer im Ventilgehäuse drehbar gelagerten Ventilspindel einstellen. Die Ventilspindel definiert hierzu zwischen dem ersten Einlass und dem Auslass einen Strömungsweg, dessen Strömungsquerschnitt von der Drehstellung der Ventilspindel abhängig ist. In Abhängigkeit von der Drehstellung der Ventilspindel kann somit pro Zeiteinheit eine mehr oder weniger große Menge an Dampf vom ersten Einlass über den Strömungsweg zum Auslass gelangen.

Aus der Veröffentlichung WO 2006/118361 A1 ist eine Steuereinrichtung bekannt. Die Steuereinrichtung ist als motorisierte Wegeventilvorrichtung ausgestaltet mit einer Antriebseinrichtung, die einen elektrischen Antriebsmotor und einen manuell betätigbaren Stellhebel aufweist, und mit einem Ventil, das drei Anschlüsse aufweist sowie einen drehbar gelagerten Schließkörper, der an einer Ventilspindel drehfest gehalten ist, wobei in Abhängigkeit von der Drehstellung der Ventilspindel mit Hilfe des Schließkörpers wahlweise die Strömungsverbindung von einem der drei Anschlüsse zu den beiden restlichen Anschlüssen unterbrochen werden kann. Die Ventilspindel kann mit Hilfe des Antriebsmotors und bei Stromausfall ersatzweise mit Hilfe des Stellhebels in Drehung versetzt werden. Die Antriebseinrichtung weist außerdem Mikroschalter auf, die mit an der Ventilspindel angeordneten Schaltnocken zusammenwirken zum Steuern des Antriebsmotors.

Zur Erzeugung des Dampfes weisen übliche Dampfreinigungsgeräte eine elektrisch beheizbare Dampferzeugungseinrichtung auf, beispielsweise einen elektrisch beheizbaren Dampfkessel, in dem eine Flüssigkeit verdampft werden kann. Mit Hilfe eines Hauptschalters kann die elektrisch beheizbare Dampferzeugungseinrichtung ein- und ausgeschaltet werden. Vor dem Einschalten des Dampfreinigungsgerätes muss darauf geachtet werden, dass die Ventilspindel in eine Drehstellung gedreht wird, in der sie allenfalls einen minimalen Strömungsquerschnitt zwischen dem ersten Einlass und dem Auslass freigibt, denn andernfalls besteht die Gefahr, dass beim Einschalten des Dampfreinigungsgerätes unbeabsichtigt eine große Menge an Dampf nach außen tritt und Beschädigungen an einer Fläche hervorruft, auf die der heiße Dampf auftrifft, oder gar den Benutzer verletzt.

Aufgabe der vorliegenden Erfindung ist es, ein Dampfreinigungsgerät der eingangs genannten Art derart weiterzubilden, dass die Gefahr einer unbeabsichtigten Dampfabgabe beim Einschalten des Dampfreinigungsgerätes verhindert wird.

Diese Aufgabe wird durch ein Dampfreinigungsgerät mit den Merkmalen von Patentanspruch 1 gelöst.

Die Steuereinrichtung des erfindungsgemäßen Dampfreinigungsgeräts weist zusätzlich zum Ventil einen elektrischen Schalter auf, wobei der Schalter ebenso wie das Ventil von der Ventilspindel betätigt wird. Mit Hilfe des elektrischen Schalters wird das Dampfreinigungsgerät ein- und ausgeschaltet. Mittels der Steuereinrichtung lässt sich somit das Ein- und Ausschalten des Dampfreinigungsgerätes mit der Steuerung der Dampfabgabe kombinieren. Die Ventilspindel bildet hierzu ein Steuerorgan, mit dem der elektrische Schalter betätigt und die Durchflussmenge von Dampf vom ersten Einlass zum Auslass vorgegeben wird.

In einer ersten Drehstellung der Ventilspindel, in der der Strömungsquerschnitt des Strömungswegs vom ersten Einlass zum Auslass bevorzugt völlig unterbrochen ist, nimmt der elektrische Schalter seine Ausschaltstellung ein und demzufolge wird das Dampfreinigungsgerät ausgeschaltet.

Wird die Ventilspindel ausgehend von der ersten Drehstellung in einer ersten Drehrichtung, beispielsweise in Uhrzeigerrichtung, verdreht, so gehtzunächst der elektrische Schalter in seine Einschaltstellung über und demzufolge wird das Dampfreinigungsgerät eingeschaltet Anschließend wird durch weiteres Verdrehen der Ventilspindel in derselben Drehrichtung die Dampfdurchflussmenge eingestellt.

Dies ermöglicht eine intuitive Bedienung der Steuereinrichtung, wobei sichergestellt ist, dass beim Einschalten des Dampfreinigungsgerätes die Ventilspindel zwingend eine Drehstellung einnimmt, in der sie allenfalls einen minimalen Strömungsquerschnitt freigibt, so dass nicht unbeabsichtigt eine größere Menge an Dampf abgegeben werden kann.

Gemäß der Erfindung wird durch Drehen der Ventilspindel in einem ersten Drehwinkelbereich die Schaltstellung des elektrischen Schalters geändert und in einem daran anschließenden zweiten Drehwinkelbereich wird die Durchflussmenge von Dampf zunehmend bis zu einer maximalen Dampfdurchflussmenge gesteigert.

Ausgehend von einer ersten Drehstellung der Ventilspindel dient somit ein erster Drehwinkelbereich dazu, die Schaltstellung des elektrischen Schalters zu ändern, so dass das Dampfreinigungsgerät mittels des Schalters in Betrieb genommen wird.

Ein an den ersten Drehwinkelbereich anschließender zweiter Drehwinkelbereich dient dann der Einstellung der Dampfdurchflussmenge. Zum Ausschalten des Dampfreinigungsgerätes muss der Benutzer die Ventilspindel über den ersten Drehwinkelbereich zurück in die erste Drehstellung drehen. Die Handhabung der erfindungsgemäßen Steuereinrichtung kann der Benutzer somit intuitiv erkennen.

Bei einer bevorzugten Ausführungsform weist das Ventil einen zweiten Einlass für ein flüssiges Medium auf, und durch Drehen der Ventilspindel in einen an den zweiten Drehwinkelbereich anschließenden dritten Drehwinkelbereich ist dem Dampf eine zunehmende Menge an Flüssigkeit beimischbar. Bei einer derartigen Ausgestaltung kann mittels der Steuereinrichtung nicht nur das Dampfreinigungsgerät ein- und ausgeschaltet und die Dampfdurchflussmenge eingestellt werden, sondern der Benutzer hat zusätzlich die Möglichkeit, dem heißen Dampf eine von der Drehstellung der Ventilspindel abhängige Menge an Flüssigkeit beizumischen. Das kombinierte Auftragen von heißem Dampf und Flüssigkeit auf einen Gegenstand ermöglicht eine besonders wirkungsvolle Reinigung. Gerade die kombinierte Abgabe von heißem Dampf und Flüssigkeit birgt allerdings die Gefahr von Verbrühungen. Diese Gefahr wird erfindungsgemäß dadurch verringert, dass die Ventilspindel zum Ausschalten des Dampfreinigungsgerätes in ihre erste Drehstellung zurückgedreht werden muss, in der sie allenfalls einen minimalen Strömungsquerschnitt freigibt. Beim erneuten Einschalten des Gerätes wird dann mittels der Ventilspindel zunächst der elektrische Schalter betätigt und erst beim weiteren Drehen wird Dampf und anschließend ein Gemisch aus Dampf und Flüssigkeit abgegeben. Die erfindungsgemäße Steuereinrichtung ermöglicht somit eine erhöhte Betriebssicherheit des Dampfreinigungsgerätes.

Günstig ist es, wenn die Ventilspindel drehfest mit einer Schaltwelle verbunden ist, die mit einem Betätigungselement des elektrischen Schalters zusammenwirkt. Die Ventilspindel kann mit der Schaltwelle einstückig verbunden sein. Beispielsweise kann ein aus dem Ventilgehäuse herausragender Abschnitt der Ventilspindel die Schaltwelle ausbilden. Alternativ kann vorgesehen sein, dass die Ventilspindel mit der Schaltwelle lösbar drehfest verbunden ist. Dies erleichtert die Montage der Steuereinrichtung und gibt die Möglichkeit, durch Wahl einer geeigneten Länge der Schaltwelle die Baugröße der Steuereinrichtung an den zur Verfügung stehenden Bauraum eines Dampfreinigungsgerätes anzupassen. Es kann somit für unterschiedliche Dampfreinigungsgeräte dieselbe Ventilspindel zum Einsatz kommen, so dass die Ventilspindel in großer Stückzahl gefertigt werden kann. Die Anpassung der Steuereinrichtung an das jeweilige Dampfreinigungsgerät kann dann mittels der Schaltwelle erfolgen, deren Länge an den zur Verfügung stehenden Bauraum angepasst wird.

Günstig ist es, wenn die Schaltwelle aus einem Kunststoffmaterial gefertigt ist.

Die Ventilspindel kann aus Metall gefertigt sein, beispielsweise aus Messing.

Die Betätigung des elektrischen Schalters mittels der Ventilspindel kann beispielsweise unter Einsatz eines Schaltnockens erfolgen, der mit einer Schaltfläche zusammenwirkt.

Günstigerweise umfasst das Betätigungselement des elektrischen Schalters einen Schaltnocken, der mit einer Schaltfläche der Schaltwelle zusammenwirkt. Der Schaltnocken kann an einem Schaltergehäuse beweglich gelagert sein und die Schaltfläche kann am Umfang der Schaltwelle angeordnet sein. Beispielsweise kann vorgesehen sein, dass die Schaltfläche eine außenseitige Vertiefung der Schaltwelle ausbildet.

Bei einer besonders bevorzugten Ausführungsform der Erfindung weist die Steuereinrichtung eine Anzeigeelektronik auf, die mit einem Drehstellungserfassungsglied gekoppelt ist, wobei mittels des Drehstellungserfassungsglieds die Drehstellung der Ventilspindel erfassbar und an die Anzeigeelektronik ein von der erfassten Drehstellung abhängiges Steuersignal übertragbar ist. Mit Hilfe des Drehstellungserfassungsglieds kann die Drehstellung der Ventilspindel berührungslos oder berührungsbehaftet erfasst werden. Ein der Drehstellung entsprechendes Signal kann dann der Anzeigeelektronik zur Verfügung gestellt werden, so dass diese die Information erhält, welche Drehstellung die Ventilspindel aktuell einnimmt. Aufgrund dieser Information kann die Anzeigeelektronik mindestens ein Leucht- oder Anzeigeelement steuern, beispielsweise eine Leuchtdiode oder eine Flüssigkristallanzeige. Dies gibt die Möglichkeit, einem Benutzer die aktuelle Drehstellung der Ventilspindel und damit die aktuell eingestellte Dampfabgabemenge optisch anzuzeigen. Die Handhabung des Dampfreinigungsgerätes wird dadurch zusätzlich vereinfacht.

Zur optischen Anzeige der aktuellen Drehstellung der Ventilspindel weist die Anzeigeelektronik bevorzugt mehrere Leucht- oder Anzeigeelemente auf, die jeweils einer bestimmten Drehstellung der Ventilspindel entsprechen. Je nach aktueller Drehstellung kann ein Leucht- oder Anzeigeelement von der Anzeigeelektronik mit elektrischem Strom beaufschlagt werden.

Eine besonders kompakte Bauweise und einfache Montage wird bei einer bevorzugten Ausgestaltung der erfindungsgemäßen Steuereinrichtung dadurch erreicht, dass der elektrische Schalter eine drehfest mit der Ventilspindel verbundene Schaltwelle aufweist, die das Drehstellungserfassungsglied durchgreift. Zur Montage kann das Drehstellungserfassungsglied auf die Schaltwelle aufgesetzt werden. Die Schaltwelle ist bevorzugt lösbar mit der Ventilspindel verbindbar.

Das Drehstellungserfassungsglied ist bevorzugt als Drehpotentiometer ausgestaltet. Das Drehpotentiometer umfasst in üblicher Weise einen beweglichen Schleifer, der an einer Widerstandsbahn gleitend anliegt. Der Schleifer lässt sich auf konstruktiv einfache Weise mit der Schaltwelle oder der Ventilspindel drehfest verbinden, so dass die Drehbewegung der Ventilspindel bzw. der Schaltwelle auf den beweglichen Schleifer übertragen wird. Dies gibt die Möglichkeit, auf einfache Weise mittels des Drehpotentiometers ein der aktuellen Drehstellung entsprechendes Spannungssignal zu generieren. Dieses Spannungssignal kann an die Anzeigeelektronik übertragen werden, die auf Basis des Spannungssignals ein Steuersignal für mindestens ein Leucht- oder Anzeigeelement generieren kann.

Bevorzugt weist die Anzeigeelektronik eine Leiterplatine auf, an der mehrere in Abhängigkeit von der Drehstellung der Ventilspindel mit Strom beaufschlagbare Leucht- oder Anzeigeelemente angeordnet sind. Es können beispielsweise mehrere Leuchtdioden zum Einsatz kommen, die jeweils einer bestimmten Drehstellung der Ventilspindel entsprechen. Die von der Ventilspindel eingenommene Drehstellung wird vom Drehstellungserfassungsglied erkannt und das der Drehstellung entsprechende elektrische Leucht- oder Anzeigeelement kann von der Anzeigeelektronik mit Strom beaufschlagt werden.

Günstig ist es, wenn die drehfest mit der Ventilspindel verbundene Schaltwelle die Leiterplatine der Anzeigeelektronik durchgreift. Dies ermöglicht eine besonders kompakte Bauform der Steuereinrichtung.

Es kann vorgesehen sein, dass die Ventilspindel kontinuierlich verdrehbar ist.

Günstig ist es, wenn die Ventilspindel in mehreren Drehstellungen verrastbar ist. Zum Verdrehen der Ventilspindel muss der Benutzer bei einer derartigen Ausführungsform einen bestimmten Rastwiderstand überwinden. Ein unbeabsichtigtes Verdrehen der Ventilspindel wird dadurch vermieden. Dies hat eine weitere Vereinfachung der Handhabung der Steuereinrichtung und eine Steigerung von deren Betriebssicherheit zur Folge.

Es kann vorgesehen sein, dass die Ventilspindel drehfest mit einem Rastteil verbunden ist, das an seinem Umfang mehrere in Umfangsrichtung verteilt angeordnete erste Rastelemente aufweist, die mit mindestens einem ortsfest gehaltenen zweiten Rastelement zusammenwirken. Die ersten Rastelemente können beispielsweise als außenseitige Rastvertiefungen des Rastteils ausgebildet sein. Das Rastteil ist bevorzugt scheibenförmig ausgestaltet.

Das Rastteil kann zusammen mit der Schaltwelle ein einteiliges Bauteil ausbilden, das mit der Ventilspindel drehfest verbunden ist.

Eine besonders einfache Montage wird bei einer vorteilhaften Ausführungsform dadurch erzielt, dass das Rastteil mit der Schaltwelle lösbar verbunden ist.

Günstig ist es, wenn das Rastteil mit der Schaltwelle werkzeuglos verbindbar ist. So kann beispielsweise vorgesehen sein, dass das Rastteil auf die Schaltwelle aufgesetzt werden kann, wobei die Schaltwelle eine zentrale Durchgangsöffnung des Rastteils durchgreift.

Wie bereits erwähnt, ist es von Vorteil, wenn die Steuereinrichtung eine drehfest mit der Ventilspindel verbundene Schaltwelle aufweist sowie ein Drehstellungserfassungsglied zum Erfassen der Drehstellung der Ventilspindel und eine Rastvorrichtung zum Verrasten der Ventilspindel in mehreren Drehstellungen. Hierbei ist es günstig, wenn die Schaltwelle in axialer Richtung auf die Ventilspindel aufsetzbar ist, das Drehstellungserfassungsglied durchgreift und mit der Rastvorrichtung drehfest und bevorzugt werkzeuglos verbindbar ist.

Zu ihrer Bedienung weist die Steuereinrichtung günstigerweise ein vom Benutzer ergreifbares Bedienelement auf, beispielsweise einen Drehknopf. Hierbei ist es von Vorteil, wenn die Schaltwelle drehfest und bevorzugt werkzeuglos mit dem Bedienelement verbindbar ist. Beispielsweise kann vorgesehen sein, dass das Bedienelement auf die Schaltwelle in axialer Richtung aufsetzbar ist.

Die nachfolgende Beschreibung einer bevorzugten Ausführungsform der Erfindung dient im Zusammenhang mit der Zeichnung der näheren Erläuterung. Es zeigen:
- Figur 1:: eine erste perspektivische Darstellung einer erfindungsgemäßen Steuereinrichtung;
- Figur 2:: eine zweite perspektivische Darstellung der Steuereinrichtung aus Figur 1, wobei eine Anzeigeelektronik ausgeblendet wurde;
- Figur 3:: eine perspektivische Darstellung der Steuereinrichtung gemäß Figur 1 nach Art einer Explosionszeichnung, wobei eine Anzeigeelektronik ausgeblendet wurde, und
- Figur 4:: ein Bedienschema der Steuereinrichtung aus Figur 1.

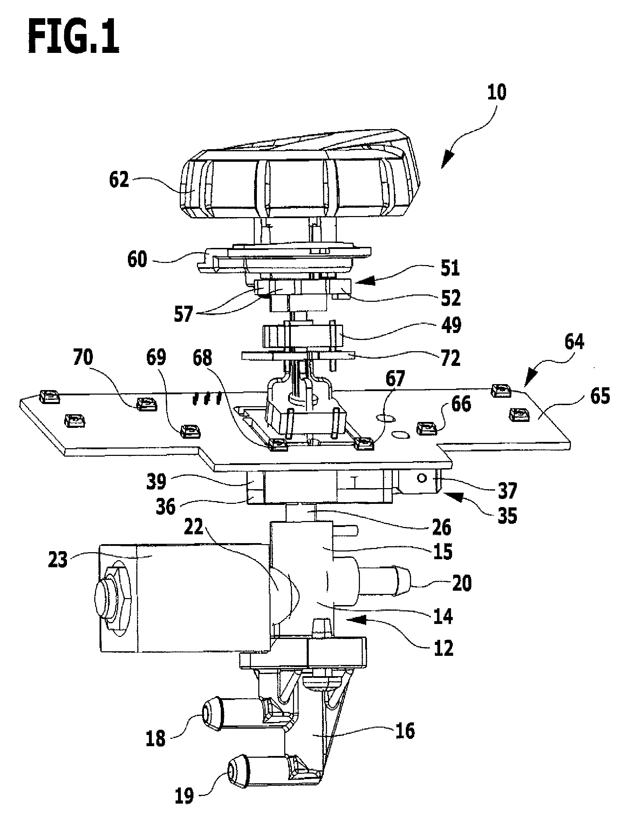

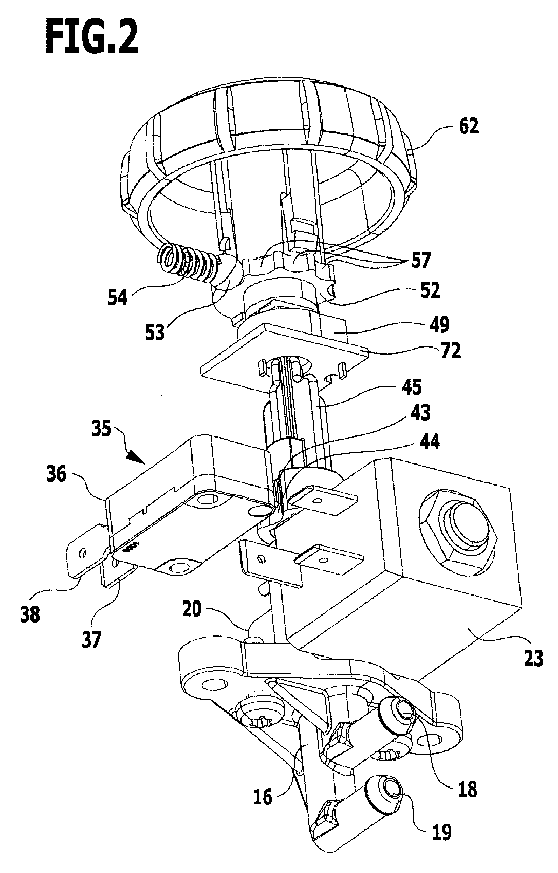

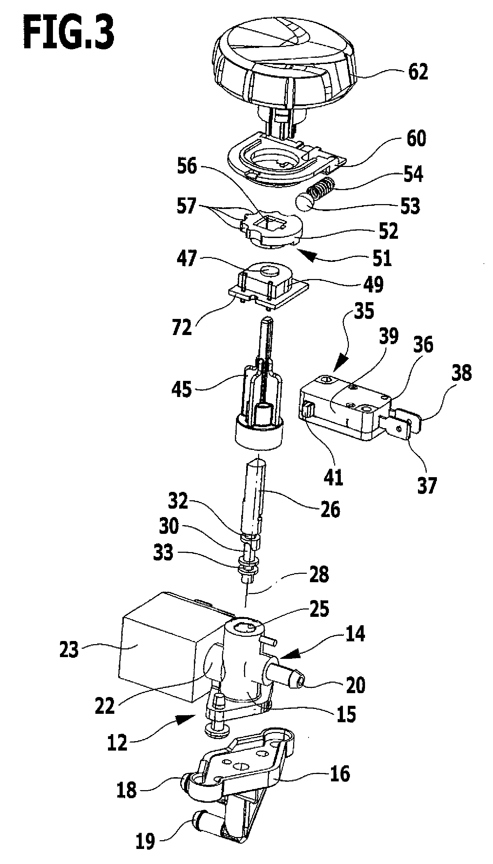

In den Figuren 1 bis 3 ist schematisch eine Steuereinrichtung 10 dargestellt, die bei einem Dampfreinigungsgerät zum Einsatz kommt und die Steuerung der Abgabe von Dampf ermöglicht. Die Steuereinrichtung umfasst ein Ventil 12 mit einem zweiteiligen Ventilgehäuse 14, das ein Gehäuseoberteil 15 und ein Gehäuseunterteil 16 aufweist. Das Gehäuseunterteil 16 umfasst einen ersten Einlass 18 und einen zweiten Einlass 19, die jeweils in Form eines Rohrstücks ausgestaltet sind. Das Gehäuseoberteil 15 weist einen Auslass 20 auf, der ebenfalls in Form eines Rohrstückes ausgebildet ist und auf der den Einlässen 18, 19 entgegengesetzten Seite des Ventilgehäuses 14 angeordnet ist. Auf der dem Auslass 20 gegenüberliegenden Seite weist das Gehäuseoberteil 15 ein Rohrstück 22 auf, auf das ein Magnetventil 23 aufgesetzt ist.

Das Gehäuseoberteil 15 ist zylinderförmig ausgebildet und weist eine axiale Durchgangsbohrung 25 auf, in die eine Ventilspindel 26 eingesetzt ist. Die Ventilspindel 26 kann um ihre Längsachse 28 verdreht werden und weist entlang ihres Außenumfangs einen Strömungskanal 30 auf, der sich in Umfangsrichtung erweitert. In axialer Richtung oberhalb und unterhalb des Strömungskanals 30 weist die Ventilspindel 26 zwei Ringnuten 32, 33 auf, in die jeweils eine in der Zeichnung zur Erzielung einer besseren Übersicht nicht dargestellte Ringdichtung eingesetzt ist.

An den ersten Einlass 18 kann eine elektrisch beheizbare Dampfquelle eines Dampfreinigungsgerätes angeschlossen werden, und an den zweiten Einlass 19 kann eine Flüssigkeitsquelle des Dampfreinigungsgerätes angeschlossen werden. Die Ventilspindel 26 kann eine Sperrstellung einnehmen, in der die Strömungsverbindung zwischen den Einlässen 18 und 19 und dem Auslass 20 unterbrochen ist. Ausgehend von dieser Sperrstellung kann die Ventilspindel 26 in einer Drehrichtung verdreht werden, um eine Strömungsverbindung zwischen dem ersten Einlass und dem Auslass 20 und bei weiterem Verdrehen zusätzlich einen Strömungsquerschnitt zwischen dem zweiten Einlass 19 und dem Auslass 20 freizugeben. Mittels des Magnetventils 23 kann die Strömungsverbindung zwischen den Einlässen 18, 19 und dem Auslass 20 komplett unterbrochen werden. Derartige Ventile sind dem Fachmann aus DE 102 58 832 A1 bekannt.

Zusätzlich zum Ventil 12 weist die Steuereinrichtung 10 einen elektrischen Schalter 35 auf mit einem Schaltergehäuse 36, von dem zwei elektrische Anschlüsse 37, 38 seitlich abstehen. Eine Seitenwand 39 weist eine Öffnung auf, die von einem Betätigungselement in Form eines Schaltnockens 41 durchgriffen wird. Der Schaltnocken 41 kann hin und her verschoben werden und dadurch kann die Schaltstellung des Schalters 35 geändert werden.

Der Schaltnocken 41 liegt an einer Schaltfläche 43 gleitend an, die eine außenseitige Vertiefung 44 einer Schaltwelle 45 ausbildet. Die Schaltwelle 45 ist bezogen auf die Längsachse 28 in axialer Richtung auf die Ventilspindel 26 aufgesetzt und mit dieser lösbar und drehfest verbunden.

Die Schaltwelle 45 durchgreift eine zentrale Durchgangsöffnung 47 eines Drehstellungserfassungsglieds, das in der dargestellten Ausführungsform als Drehpotentiometer 49 ausgestaltet ist. Das Drehpotentiometer 49 weist in üblicher Weise einen in der Zeichnung nicht dargestellten beweglichen Schleifer auf, der an einer Widerstandsbahn entlang gleitet. Der Schleifer ist drehfest mit der Schaltwelle 45 verbunden, so dass mittels des Drehpotentiometers 49 ein von der Drehstellung der Schaltwelle und damit auch von der Drehstellung der Ventilspindel 26 abhängiges Steuersignal abgegriffen werden kann.

Oberhalb des Drehpotentiometers 49 weist die Steuereinrichtung 10 eine Rastvorrichtung 51 auf mit einem Rastteil in Form einer Rastscheibe 52 und mit einer Rastkugel 53, die von einer Rastfeder 54 in Richtung auf die Rastscheibe 52 vorgespannt ist. Die Rastscheibe 52 weist mittig eine Durchgangsöffnung 56 auf, die von der Schaltwelle 45 durchgriffen ist, wobei die Schaltwelle mit der Rastscheibe 52 drehfest verbunden ist. Durch Drehen der Schaltwelle 45 kann die Rastscheibe 52 relativ zur ortsfest gehaltenen Rastkugel 53 verdreht werden. Entlang ihres Außenumfangs weist die Rastscheibe 52 mehrere Rastvertiefungen 57 auf. Je nachdem, welche Drehstellung die Schaltwelle 45 einnimmt, kann die Rastkugel 53 in eine der Rastvertiefungen 57 eintauchen. Soll die Schaltwelle 45 verdreht werden, so muss hierzu ein von der Rastfeder 54 auf die Rastkugel 53 ausgeübter Rastwiderstand überwunden werden.

Das der Ventilspindel 26 abgewandte freie Ende der Schaltwelle 45 durchgreift eine zentrale Öffnung 59 eines Deckels 60 und ist mit einem auf den Deckel 60 aufgesetzten Bedienelement in Form eines Drehknopfes 62 drehfest verbunden.

Wie aus Figur 1 deutlich wird, trägt die Schaltwelle 45 im Bereich zwischen dem elektrischen Schalter 35 und dem Drehpotentiometer 49 eine Anzeigeelektronik 64 mit einer Leiterplatine 65, auf der mehrere elektrische Leuchtelemente in Form von Leuchtdioden 66, 67, 68, 69 und 70 angeordnet sind. Die Anzeigeelektronik 64 ist über an sich bekannte und deshalb in der Zeichnung zur Erzielung einer besseren Übersicht nicht dargestellte elektrische Verbindungsleitungen mit einer Leiterplatine 72 verbunden, auf der das Drehpotentiometer 49 positioniert ist. Sowohl die Leiterplatine 72 des Drehpotentiometers 49 als auch die Leiterplatine 65 der Anzeigeelektronik 64 werden von der Schaltwelle 45 durchgriffen.

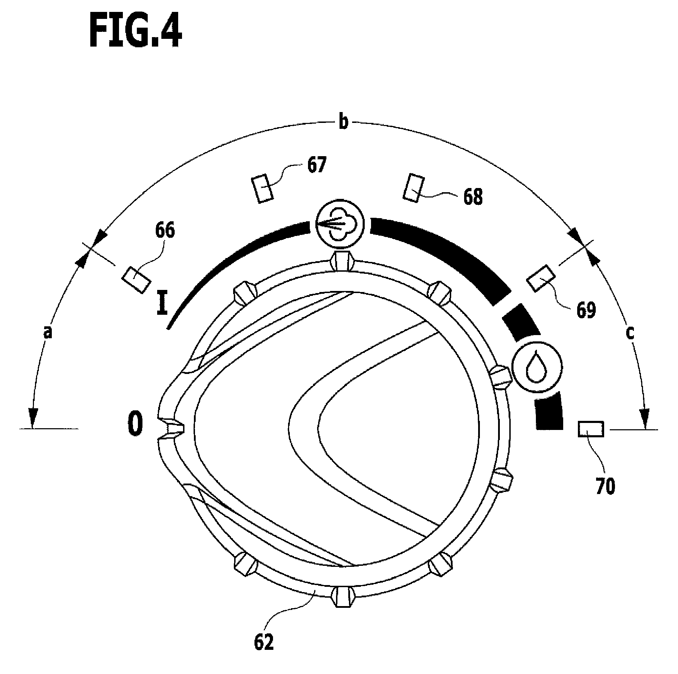

Wie bereits erwähnt, kann mittels der Steuereinrichtung 10 die Abgabe von Dampf und von einem Gemisch aus Dampf und Flüssigkeit eingestellt werden. Die Steuereinrichtung 10 kommt bei einem Dampfreinigungsgerät zum Einsatz. Mittels des elektrischen Schalters 35 kann das Dampfreinigungsgerät ein-und ausgeschaltet werden. In Figur 4 ist ein Bedienschema der Steuereinrichtung 10 dargestellt. In einer durch die Ziffer "0" veranschaulichten ersten Drehstellung der Ventilspindel 26 und der Schaltwelle 45 nimmt der elektrische Schalter 35 seine Ausschaltstellung ein und die Ventilspindel 26 unterbricht die Strömungsverbindung zwischen den Einlässen 18, 19 und dem Auslass 20 des Ventilgehäuses 14.

Wird der Drehknopf 62 ausgehend von der ersten Drehwinkelstellung über einen ersten Drehwinkelbereich a in eine durch die Ziffer "I" veranschaulichte zweite Drehwinkelstellung verdreht, so nimmt der elektrische Schalter 35 seine Einschaltstellung ein. Dies erlaubt es, das Dampfreinigungsgerät einzuschalten und das Magnetventil 23 in seine Offenstellung zu bewegen. Durch weiteres Verdrehen des Drehknopfes 62 über einen zweiten Drehwinkelbereich b wird dann von der Ventilspindel 26 ein zunehmend größerer Strömungsquerschnitt zwischen dem ersten Einlass 18 und dem Auslass 20 freigegeben. Wird die Ventilspindel 26 anschließend in gleich bleibender Drehrichtung, bezogen auf Figur 4 in Uhrzeigerrichtung, in einen dritten Drehwinkelbereich c verdreht, so wird von der Ventilspindel 26 zusätzlich zur Strömungsverbindung zwischen dem ersten Einlass 18 und dem Auslass 20 auch eine Strömungsverbindung mit zunehmenden Strömungsquerschnitt zwischen dem zweiten Einlass 19 und dem Auslass 20 freigegeben, so dass dem über den Auslass 20 austretenden Dampf eine zunehmende Menge an Flüssigkeit beigemischt werden kann.

Mittels der Rastvorrichtung 51 ist der Drehknopf 62 zusammen mit der Schaltwelle 45 und der Ventilspindel 26 verrastbar. Die jeweilige Drehstellung, die der verrastete Drehknopf 62 aktuell einnimmt, wird dem Benutzer optisch angezeigt, indem die der aktuellen Drehstellung entsprechende Leuchtdiode 66, 67, 68, 69 oder 70 von der Anzeigeelektronik 64 mit Strom beaufschlagt wird. Die aktuelle Drehstellung wird vom Drehpotentiometer 49 erfasst.

Falls der Benutzer das Dampfreinigungsgerät wieder ausschalten möchte, so muss er den Drehknopf 62 entgegen der ursprünglichen Drehrichtung, bezogen auf Figur 4 also entgegen Uhrzeigerrichtung, zurück in die erste Drehwinkelstellung verdrehen. Die Abgabe von Dampf und einem Gemisch aus Dampf und Flüssigkeit über den Auslass 20 wird dadurch unterbunden und der Schalter 35 wird in seine Ausschaltstellung zurückgedreht.

Das erfindungsgemäße Dampfreinigungsgerät ermöglicht somit eine intuitive Bedienung, wobei ausgeschlossen ist, dass beim Einschalten des Dampfreinigungsgerätes bereits eine beträchtliche Menge an Dampf oder gar ein Gemisch aus Dampf und Flüssigkeit über den Auslass 20 des Ventils 12 austreten kann.

## Patentansprüche

1. Dampfreinigungsgerät mit einer Steuereinrichtung (10) zur Steuerung der Abgabe von Dampf, mit einem Ventil (12), das einen ersten Einlass (18) und einen Auslass (20) aufweist sowie eine drehbar gelagerte Ventilspindel (26), wobei in Abhängigkeit von der Drehstellung der Ventilspindel (26) die Durchflussmenge von Dampf vom ersten Einlass (18) zum Auslass (20) einstellbar ist, **dadurch gekennzeichnet, dass** die Steuereinrichtung (10) einen elektrischen Schalter (35) umfasst, der durch Drehen der Ventilspindel (26) betätigt wird, wobei mittels des Schalters (35) das Dampfreinigungsgerät ein-und ausgeschaltet wird, wobei durch Drehen der Ventilspindel (26) in einem ersten Drehwinkelbereich (a) die Schaltstellung des elektrischen Schalters (35) geändert wird und in einem daran anschließenden zweiten Drehwinkelbereich (b) die Durchflussmenge von Dampf bis zu einer maximalen Dampfdurchflussmenge steigerbar ist.

2. Dampfreinigungsgerät nach Anspruch 1, **dadurch gekennzeichnet, dass** das Ventil (12) einen zweiten Einlass (19) für ein flüssiges Medium aufweist, und dass durch Drehen der Ventilspindel (26) in einem an den zweiten Drehwinkelbereich (b) anschließenden dritten Drehwinkelbereich (c) dem Dampf eine zunehmende Menge an Flüssigkeit beimischbar ist.

3. Dampfreinigungsgerät nach einem der voranstehenden Ansprüche, **dadurch gekennzeichnet, dass** die Ventilspindel (26) drehfest mit einer Schaltwelle (45) verbunden ist, die mit einem Betätigungselement (41) des elektrischen Schalters (35) zusammenwirkt.

4. Dampfreinigungsgerät nach Anspruch 3, **dadurch gekennzeichnet, dass** das Betätigungselement des elektrischen Schalters (35) einen Schaltnocken (41) umfasst, der mit einer Schaltfläche (43) der Schaltwelle (45) zusammenwirkt.

5. Dampfreinigungsgerät nach einem der voranstehenden Ansprüche, **dadurch gekennzeichnet, dass** die Steuereinrichtung (10) eine Anzeigeelektronik (64) aufweist, die mit einem Drehstellungserfassungsglied (49) gekoppelt ist, wobei mittels des Drehstellungserfassungsglieds (49) die Drehstellung der Ventilspindel (26) erfassbar und an die Anzeigeelektronik (64) ein von der erfassten Drehstellung abhängiges Steuersignal übertragbar ist.

6. Dampfreinigungsgerät nach Anspruch 5, **dadurch gekennzeichnet, dass** der elektrische Schalter (35) eine drehfest mit der Ventilspindel (26) verbundene Schaltwelle (45) aufweist, die das Drehstellungserfassungsglied (49) durchgreift.

7. Dampfreinigungsgerät nach Anspruch 5 oder 6, **dadurch gekennzeichnet, dass** das Drehstellungserfassungsglied als Drehpotentiometer (49) ausgestaltet ist.

8. Dampfreinigungsgerät nach Anspruch 5, 6 oder 7, **dadurch gekennzeichnet, dass** die Anzeigeelektronik (64) eine Leiterplatine (65) aufweist, an der mehrere Leucht- oder Anzeigeelemente (66, 67, 68, 69, 70) angeordnet sind, die in Abhängigkeit von der Drehstellung der Ventilspindel (26) mit Strom beaufschlagbar sind.

9. Dampfreinigungsgerät nach Anspruch 8 in Verbindung mit Anspruch 6, **dadurch gekennzeichnet, dass** die Schaltwelle (45) die Leiterplatine (65) der Anzeigeelektronik (64) durchgreift.

10. Dampfreinigungsgerät nach einem der voranstehenden Ansprüche, **dadurch gekennzeichnet, dass** die Ventilspindel (26) in mehreren Drehstellungen verrastbar ist.

11. Dampfreinigungsgerät nach Anspruch 10, **dadurch gekennzeichnet, dass** die Ventilspindel (26) drehfest mit einem Rastteil (52) verbunden ist, das an seinem Umfang mehrere in Umfangsrichtung verteilt angeordnete erste Rastelemente (57) aufweist, die mit mindestens einem ortsfest gehaltenen zweiten Rastelement (53) zusammenwirken.

12. Dampfreinigungsgerät nach einem der voranstehenden Ansprüche, **dadurch gekennzeichnet, dass** die Steuereinrichtung (10) eine drehfest mit der Ventilspindel (26) verbundene Schaltwelle (45) aufweist sowie ein Drehstellungserfassungsglied (49) zum Erfassen der Drehstellung der Ventilspindel (26) und eine Rastvorrichtung (51) zum Verrasten der Ventilspindel (26) in mehreren Drehstellungen, wobei die Schaltwelle (45) in axialer Richtung auf die Ventilspindel (26) aufsetzbar ist, das Drehstellungserfassungsglied (49) durchgreift und mit der Rastvorrichtung (51) drehfest verbindbar ist.

13. Dampfreinigungsgerät nach Anspruch 12, **dadurch gekennzeichnet, dass** die Schaltwelle (45) drehfest mit einem vom Benutzer ergreifbaren Bedienelement (62) verbindbar ist.

## Claims

1. Steam cleaner with a control device (10) for controlling the discharge of steam, with a valve (12), which has a first inlet (18) and an outlet (20) as well as a rotatably mounted valve spindle (26), the through-flow quantity of steam from the first inlet (18) to the outlet (20) being adjustable depending on the rotational position of the valve spindle (26), **characterized in that** the control device (10) comprises an electric switch (35), which is actuated by rotating the valve spindle (26), the steam cleaner being switched on and off by means of the switch (35), the switching position of the electric switch (35) being changed by rotating the valve spindle (26) in a first rotation angle range (a) and the through-flow quantity of steam being increasable up to a maximum steam through-flow quantity in an adjoining second rotation angle range (b).

2. Steam cleaner according to claim 1, **characterized in that** the valve (12) has a second inlet (19) for a liquid medium, and **in that** by rotating the valve spindle (26) in a third rotation angle range (c) adjoining the second rotation angle range (b), an increasing quantity of liquid is mixable with the steam.

3. Steam cleaner according to any one of the preceding claims, **characterized in that** the valve spindle (26) is non-rotatably connected to a switching shaft (45), which cooperates with an actuating element (41) of the electric switch (35).

4. Steam cleaner according to claim 3, **characterized in that** the actuating element of the electric switch (35) comprises a switching cam (41), which cooperates with a switching area (43) of the switching shaft (45).

5. Steam cleaner according to any one of the preceding claims, **characterized in that** the control device (10) has display electronics (64), which are coupled to a rotational position detection member (49), the rotational position of the valve spindle (26) being detectable by means of the rotational position detection member (49) and a control signal, which depends on the detected rotational position, being transmittable to the display electronics (64).

6. Steam cleaner according to claim 5, **characterized in that** the electric switch (35) has a switching shaft (45), which is non-rotatably connected to the valve spindle (26) and engages through the rotational position detection member (49).

7. Steam cleaner according to claim 5 or 6, **characterized in that** the rotational position detection member is configured as a rotary potentiometer (49).

8. Steam cleaner according to claim 5, 6 or 7, **characterized in that** the display electronics (64) have a printed circuit board (65), on which a plurality of lighting or display elements (66, 67, 68, 69, 70) are arranged, to which current is configured to be supplied depending on the rotational position of the valve spindle (26).

9. Steam cleaner according to claim 8 in conjunction with claim 6, **characterized in that** the switching shaft (45) engages through the printed circuit board (65) of the display electronics (64).

10. Steam cleaner according to any one of the preceding claims, **characterized in that** the valve spindle (26) is latchable in a plurality of rotational positions.

11. Steam cleaner according to claim 10, **characterized in that** the valve spindle (26) is non-rotatably connected to a latching part (52), which, on its periphery, has a plurality of first latching elements (57), which are arranged distributed in the peripheral direction and cooperate with at least one fixedly held second latching element (53).

12. Steam cleaner according to any one of the preceding claims, **characterized in that** the control device (10) has a switching shaft (45), which is non-rotatably connected to the valve spindle (26), as well as a rotational position detection member (49) to detect the rotational position of the valve spindle (26), and a latching mechanism (51) for latching the valve spindle (26) in a plurality of rotational positions, the switching shaft (45) being placeable in the axial direction on the valve spindle (26), engaging through the rotational position detection member (49) and being non-rotatably connectable to the latching mechanism (51).

13. Steam cleaner according to claim 12, **characterized in that** the switching shaft (45) is non-rotatably connectable to a user-held operating element (62).

## Revendications

1. Appareil de nettoyage à vapeur comprenant un dispositif de commande (10) servant à commander l'émission de vapeur, comprenant une soupape (12) qui comporte une première entrée (18) et une sortie (20) ainsi qu'une tige de soupape (26) montée à rotation, le débit de vapeur de la première entrée (18) à la sortie (20) pouvant être réglé en fonction de la position de rotation de la tige de soupape (26), **caractérisé en ce que** le dispositif de commande (10) comprend un commutateur électrique (35) qui est actionné à la suite d'une rotation de la tige de soupape (26), l'appareil de nettoyage à vapeur étant mis sous tension et hors tension au moyen du commutateur (35), une rotation de la tige de soupape (26) dans une première plage d'angle de rotation (a) permettant de modifier la position de commutation du commutateur électrique (35) et une rotation de ladite tige dans une deuxième plage d'angles de rotation (b) faisant suite à la première plage permettant d'augmenter le débit de vapeur jusqu'à un débit de vapeur maximal.

2. Appareil de nettoyage à vapeur selon la revendication 1, **caractérisé en ce que** la soupape (12) comprend une deuxième entrée (19) pour un milieu liquide, et **en ce qu'**une rotation de la tige de soupape (26) dans une troisième plage d'angles de rotation (c) faisant suite à la deuxième plage d'angles de rotation (b) permet de mélanger une quantité croissante de liquide à la vapeur.

3. Appareil de nettoyage à vapeur selon l'une quelconque des revendications précédentes, **caractérisé en ce que** la tige de soupape (26) est solidaire en rotation d'un arbre de commutation (45) qui coopère avec un élément d'actionnement (41) du commutateur électrique (35).

4. Appareil de nettoyage à vapeur selon la revendication 3, **caractérisé en ce que** l'élément d'actionnement du commutateur électrique (35) comprend une came de commutation (41) qui coopère avec une surface de commutation (43) de l'arbre de commutation (45).

5. Appareil de nettoyage à vapeur selon l'une quelconque des revendications précédentes, **caractérisé en ce que** le dispositif de commande (10) comprend une électronique d'affichage (64) qui est accouplée à un organe de détection de position de rotation (49), la position de rotation de la tige de soupape (26) pouvant être détectée au moyen de l'organe de détection de position de rotation (49) et un signal de commande dépendant de la position de rotation détectée pouvant être transmis à l'électronique d'affichage (64).

6. Appareil de nettoyage à vapeur selon la revendication 5, **caractérisé en ce que** le commutateur électrique (35) comprend un arbre de commutation (45) qui est relié solidaire en rotation à la tige de soupape (26) et que l'organe de détection de position de rotation (49) traverse.

7. Appareil de nettoyage à vapeur selon la revendication 5 ou 6, **caractérisé en ce que** l'organe de détection de position de rotation est réalisé sous la forme d'un potentiomètre rotatif (49).

8. Appareil de nettoyage à vapeur selon la revendication 5, 6 ou 7, **caractérisé en ce que** l'électronique d'affichage (64) comprend une carte de circuit imprimé (65) sur laquelle plusieurs éléments d'éclairage ou d'affichage (66, 67, 68, 69, 70) sont agencés, lesquels peuvent être alimentés en courant en fonction de la position de rotation de la tige de soupape (26).

9. Appareil de nettoyage à vapeur selon la revendication 8 en liaison avec la revendication 6, **caractérisé en ce que** l'arbre de commutation (45) traverse la carte de circuit imprimé (65) de l'électronique d'affichage (64).

10. Appareil de nettoyage à vapeur selon l'une quelconque des revendications précédentes, **caractérisé en ce que** la tige de soupape (26) peut être encliquetée dans plusieurs positions de rotation.

11. Appareil de nettoyage à vapeur selon la revendication 10, **caractérisé en ce que** la tige de soupape (26) est solidaire en rotation d'une partie d'encliquetage (52) qui présente sur sa périphérie plusieurs premiers éléments d'encliquetage (57) qui sont répartis dans la direction périphérique et qui coopèrent avec au moins un deuxième élément d'encliquetage (53) maintenu fixe.

12. Appareil de nettoyage à vapeur selon l'une quelconque des revendications précédentes, **caractérisé en ce que** le dispositif de commande (10) comprend un arbre de commutation (45) relié solidaire en rotation à la tige de soupape (26) ainsi qu'un organe de détection de position de rotation (49) servant à détecter la position de rotation de la tige de soupape (26) et un dispositif d'encliquetage (51) servant à encliqueter la tige de soupape (26) dans plusieurs positions de rotation, l'arbre de commutation (45) pouvant être mis en place sur la tige de soupape (26) dans la direction axiale, traversant l'organe de détection de position de rotation (46) et pouvant être relié solidaire en rotation au dispositif d'encliquetage (51).

13. Appareil de nettoyage à vapeur selon la revendication 12, **caractérisé en ce que** l'arbre de commutation (45) peut être relié solidaire en rotation à un élément de commande (62) pouvant être saisi par l'utilisateur.
